# EUROPEAN PATENT APPLICATION

(11) **EP 4 057 259 A1**
(43) Date of publication of application: **14.09.2022**
(21) Application number: 22155878.6
(22) Date of filing: 09.02.2022
(51) Int. Cl.: G09B 7/06

(54) **CHARACTER INPUT DEVICE, CHARACTER INPUT METHOD, AND CHARACTER INPUT PROGRAM**

(30) Priority: 12.03.2021 JP 2021040064; 11.11.2021 JP 2021183856
(71) Applicant: OMRON Corporation, Shiokoji-dori, Shimogyo-Ku Kyoto-shi Kyoto 600-8530 (JP)
(72) Inventor: UMEDA, Shota, Kyoto-shi, 604-8152 (JP)
(74) Representative: Horn Kleimann Waitzhofer Patentanwälte PartG mbB

(57) **Abstract**

A character input device that suppresses a decrease in the learning effect on the user is provided. The character input device includes a candidate retrieval unit configured to retrieve conversion candidates for an input character string that is input, and a sequence determination unit configured to determine a sequence of the conversion candidates. The sequence determination unit dynamically changes a parameter used to determine the sequence of the conversion candidates.

## Description

### CROSS-REFERENCES TO RELATED APPLICATIONS

This application claims priority to Japanese Patent Application No. 2021-040064 filed March 12, 2021, the entire contents of which are incorporated herein by reference.

### FIELD

The present invention relates to a technique for supporting input to digital learning materials.

### BACKGROUND

Many digital learning materials for improving the knowledge and abilities of users (learners) have conventionally been known. JP 2018-59973A describes a system in which a user answers questions using a tablet-type portable information terminal or a stand-alone personal computer.

JP 2018-59973A is an example of background art.

However, in the configuration of JP 2018-59973A, when the user inputs an answer in digital learning material, the user selects a candidate serving as the answer while the conversion candidates are displayed in a certain sequence. If the user repeatedly answers the same question, the character conversion function may cause the correct answer to be displayed as the first conversion candidate (at the top display position). The user can then mechanically select the correct answer, which may reduce the learning effect.

Accordingly, an object of the present invention is to provide a character input device that suppresses a decrease in the learning effect on the user.

### SUMMARY

According to an example of the present disclosure, this character input device includes: a candidate retrieval unit configured to retrieve conversion candidates for an input character string that is input; and a sequence determination unit configured to determine a sequence of the conversion candidates. the sequence determination unit dynamically changes a parameter used to determine the sequence of the conversion candidates.

As is well-known, types of character input include one approach that requires the user to input a representation of the pronunciation of a word to be input as a character string (desired character string) and one approach that requires the user to input a spelling of a word to be input as a character string. The proper approach depends on the type of language to be input. For example, Japanese and Chinese are languages that use character input in which the user is required to input a representation of the pronunciation (also known as "reading", e.g. kana (Japanese kana syllabograms) or pinyin) of a word to be input as a character string. Also, for example, English and German are languages that use character input in which the user is required to input a spelling of a word to be to input as a character string.

Depending on the language that is input, "input character string" as used here may mean a character string for a representation of the pronunciation of a word to be input, or may mean a character string representing the spelling of a word to be input. Conversion candidates include not only character strings that exactly match the input string, but also character strings that match the input character string forward (so-called predictive conversion candidates).

With this configuration, even if the same input character string is repeatedly input, the sequence of conversion candidates corresponding to this input character string can be dynamically changed. This configuration makes it possible to suppress a decrease in the learning effect on the user in iterative learning using digital learning materials.

The parameter may be, for example, a random number generated in response to the input of the input character string, the time of input of the input character string (input start time, input end time etc.), or any other timing may be used as a trigger to determine the parameter.

This configuration makes it possible to change the sequence of the conversion candidates for the input character string that is input by the user, through simple processing.

The character input device may further include a communication unit configured to transmit and receive the input character string and the conversion candidates.

This configuration enables the user to obtain the conversion candidates through a network.

The character input device may further include a grading unit configured to grade an answer selected from the conversion candidates.

This configuration enables the user to easily determine whether the answer is correct or incorrect.

In the character input device, the sequence determination unit may calculate a weight in accordance with a type of the conversion candidates and determines the sequence of the conversion candidates while reflecting the weight.

This configuration makes it possible to arrange the conversion candidates in accordance with the user's learning environment.

According to this invention, it is possible to suppress a decrease in the learning effect on the user.

### BRIEF DESCRIPTION OF THE DRAWINGS

FIG. 1 is a schematic diagram showing a network system that uses a digital learning material in an example.
FIG. 2 is a block diagram showing a configuration of a main part of a server device in this example.
FIG. 3 is a block diagram showing a configuration of a main part of a user terminal in this example.
FIGS. 4A and 4B are illustrative diagrams of a display of the user terminal in this example.
FIGS. 5A, 5B, and 5C are illustrative diagrams of the display of the user terminal in this example.
FIG. 6 is a flowchart showing a processing flow of the server device in this example.
FIG. 7 is a flowchart showing a processing flow of the user terminal in this example.
FIG. 8 is a block diagram showing a configuration of a main part of a user terminal of Variation 2.
FIGS. 9A and 9B are illustrative diagram of a display of a user terminal of Variation 3.

### DETAILED DESCRIPTION

Hereinafter, embodiments of a character input device according to the present invention will be described with reference to several figures.

### 1. Application Example

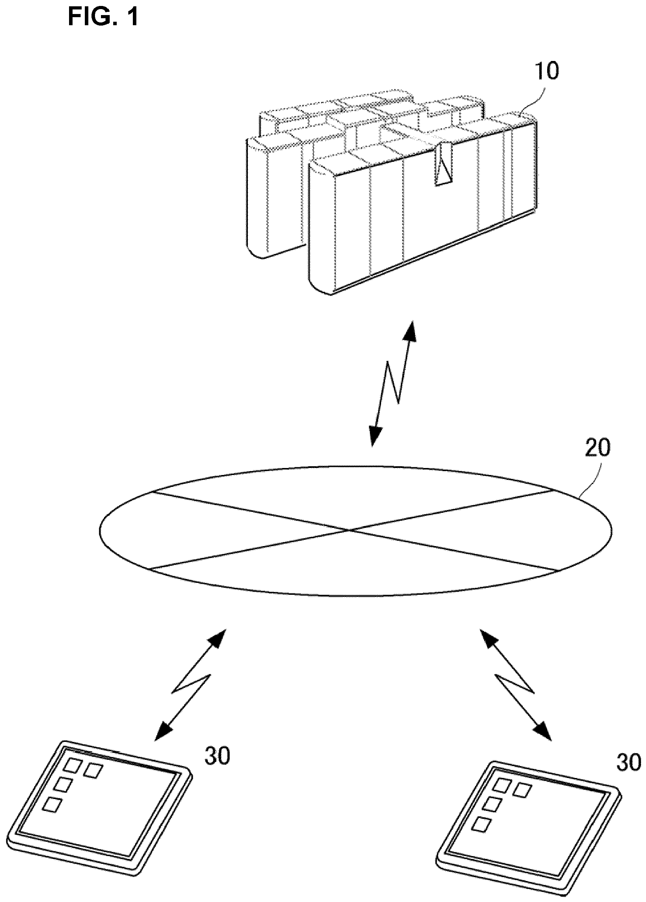

FIG. 1 is a schematic diagram showing a network system that uses a digital learning material. The network system in this example has a configuration in which a plurality of user terminals 30 are connected to a server device 10 via a network 20, as shown in FIG. 1. The server device 10 performs data communication with the user terminals 30 connected via the network 20.

The user terminals 30 are personal computers, tablet terminals, or the like that are operated by users who learn with the digital learning material. The server device 10 distributes the digital learning material to the user terminals 30. The server device 10 also grades answers transmitted from the user terminals 30.

In this example, the character input device according to this invention is applied to the server device 10. The server device 10 distributes questions used in the digital learning material to the user terminals 30.

Each user terminal 30 displays the questions distributed from the server device 10 on a screen of a display. The user operates a keyboard or a touch panel, serving as an input device, to input answers to the questions.

The user inputs, for example, the kana characters (Japanese kana syllabograms) 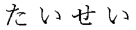 (transcription: "taisei") as the answer to a question displayed on the display. The user then presses a conversion button. The user terminal 30 transmits, to the server device 10, the kana characters 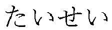 , which are the input character string that is input this time.

The server device 10 generates conversion candidates that corresponds to the input character string received from the user terminal 30. The server device 10 generates random numbers and determines the sequence of the conversion candidates using the generated random numbers.

The server device 10 transmits the conversion candidates and the sequence of the conversion candidates to the user terminal 30. The user terminal 30 displays the conversion candidates received from the server device 10. The user terminal 30 displays the conversion candidates in the sequence received from the server device 10. The user operates a mouse, a keyboard, or a touch panel, serving as an input device, to select the conversion candidate that the user thinks is the answer from the displayed conversion candidates.

The user terminal 30 transmits, to the server device 10, the selected conversion candidate as the user's answer.

The server device 10 grades the answer to check whether it is correct or incorrect on a user-by-user basis, that is, for each user terminal 30.

Thus, in the network system in this example, the sequence of conversion candidates corresponding to one input character string dynamically changes even if the user repeatedly inputs the same character string. Accordingly, if the user performs iterative learning and repeatedly answers the same question, the position (rank) at which the conversion candidate that is the correct answer is displayed can be dynamically changed. This configuration makes it possible to suppress a decrease in the learning effect on the user in iterative learning using digital learning materials.

### 2. Example Configuration

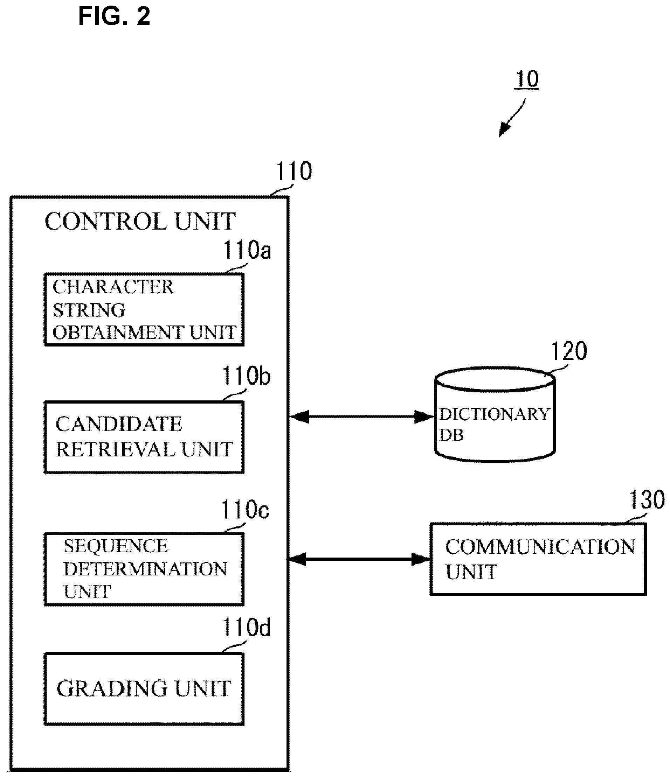

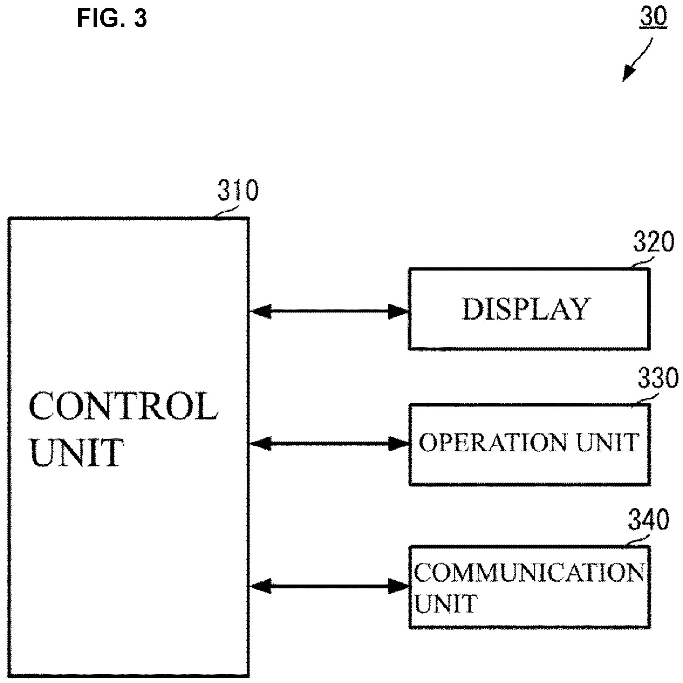

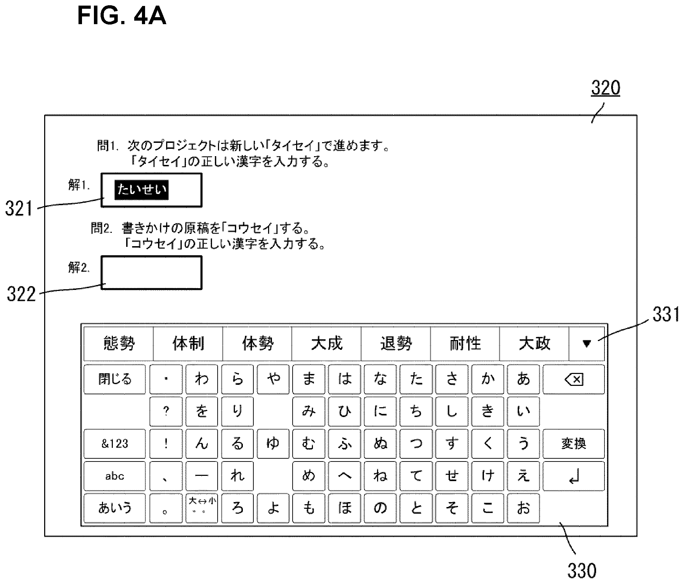

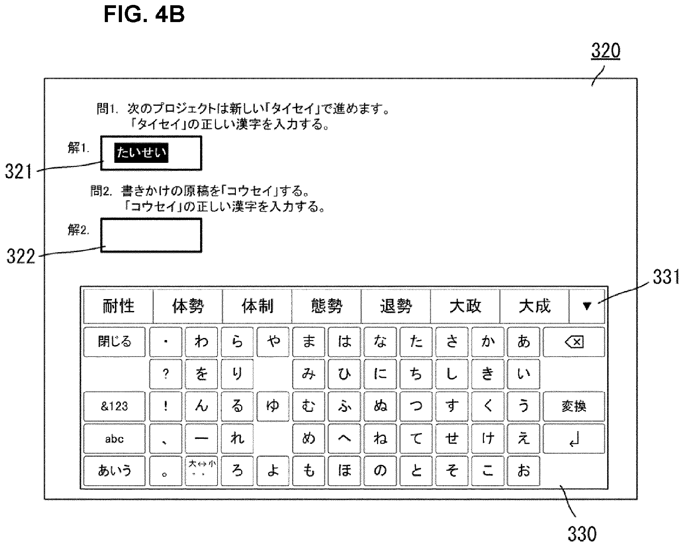

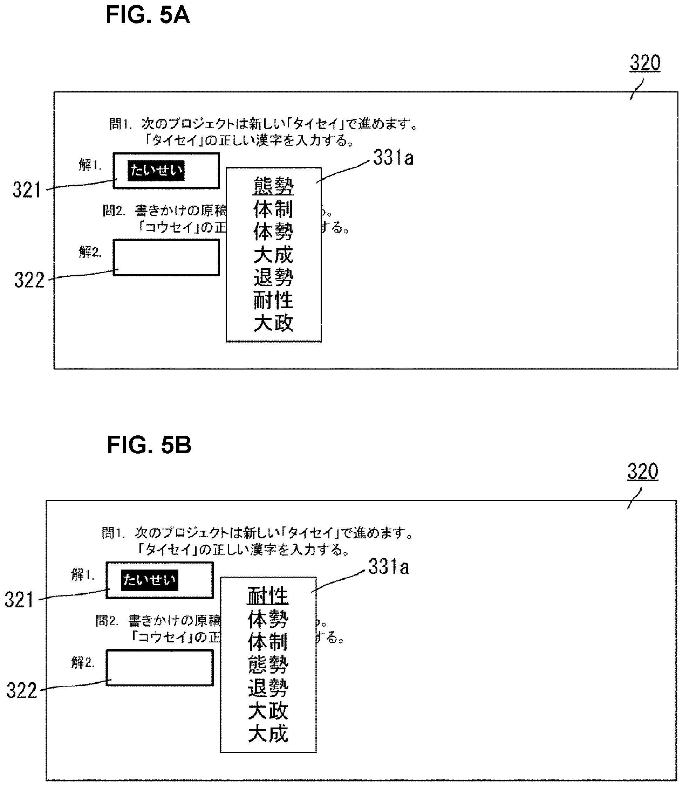

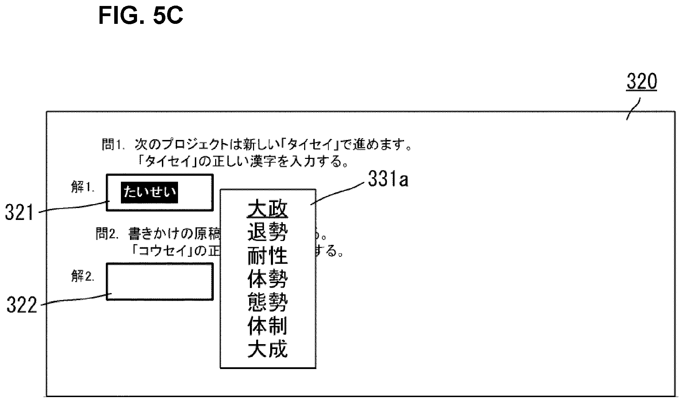

FIG. 2 is a block diagram showing a configuration of a main part of the server device in this example. FIG. 3 is a block diagram showing a configuration of a main part of the user terminal in this example. FIGS. 4A and 4B are illustrative diagrams of the display of the user terminal in this example. FIGS. 5A, 5B, and 5C are illustrative diagram of the display of the user terminal in this example. Here, a Japanese character string input device will be described as an example.

First, a configuration of the server device 10 will be described with reference to FIG. 2. The server device 10 includes a control unit 110, a dictionary database 120 (dictionary DB 120), and a communication unit 130.

### Configuration of control unit

The control unit 110 controls each part of the server device 10. The control unit 110 includes a character string obtainment unit 110a, a candidate retrieval unit 110b, a sequence determination unit 110c, and a grading unit 110d.

### Configuration of dictionary database

The dictionary database 120 is a database in which readings (kana character strings), parts of speech, converted character strings (character strings converted from kana to kanji (Chinese characters)), and so on, are registered in association with each other. In this example, a kana character string corresponds to an "input character string" referred to in this invention. The communication unit 130 performs data communication with the user terminals 30 connected via the network 20.

The dictionary database 120 may be, for example, a storage medium such as an HDD (Hard Disk Drive) or an SSD (Solid State Drive), or may be any other storage medium.

### Detailed configuration of control unit

The character string obtainment unit 110a obtains a kana character string received from a user terminal 30. The character string obtainment unit 110a outputs the kana character string to the candidate retrieval unit 110b.

The candidate retrieval unit 110b searches the dictionary database 120 using the kana character string. More specifically, the candidate retrieval unit 110b searches the dictionary database 120 using the kana character string as a key, and retrieves conversion candidates. The conversion candidates obtained here include not only conversion candidates associated with a reading that exactly matches the kana character string but also conversion candidates (predictive conversion candidates) associated with a reading that matches the kana character string forward. The candidate retrieval unit 110b outputs the obtained conversion candidates to the sequence determination unit 110c.

The sequence determination unit 110c dynamically determines the sequence of conversion candidates using random numbers (for example, pseudorandom numbers). In other words, the sequence determination unit 110c randomly arranges the conversion candidates using random numbers. These random numbers are generated in accordance with the user's operation to input kana characters. These random numbers correspond to a "parameter" of the present invention.

Note that here, a configuration of the sequence determination unit 110c is described, in which the sequence of conversion candidates is dynamically determined using random numbers. However, in a configuration in which the sequence of the conversion candidates output by the candidate retrieval unit 110b is predetermined, the sequence determination unit 110c may also rearrange the conversion candidates using random numbers.

As for the parameter used by the sequence determination unit 110c to determine the sequence of conversion candidates, the aforementioned random numbers may also be replaced with the time of input of the input character string (input start time, input end time, etc.) or the like.

The communication unit 130 transmits, to the user terminal 30, the conversion candidates obtained by the candidate retrieval unit 110b and the sequence of the conversion candidates determined by the sequence determination unit 110c.

The grading unit 110d grades the conversion candidate selected on the user terminal 30, i.e., the user's answer.

The control unit 110 of the server device 10 is constituted by a hardware CPU, a memory, and other electronic circuits. When a character input program according to this invention is executed, the hardware CPU works as the character string obtainment unit 110a, the candidate retrieval unit 110b, the sequence determination unit 110c, and the grading unit 110d. The memory has an area for loading the character input program according to this invention, and an area for temporarily storing data or the like that is generated when the character input program is executed. The control unit 110 may alternatively be an LSI (large-scale integrated circuit) in which a hardware CPU, a memory, and so on, are integrated. The hardware CPU is a computer that executes a character input method according to this invention.

Next, a configuration of the user terminals 30 will be described with reference to FIG. 3. Each user terminal 30 includes a control unit 310, a display 320, an operation unit 330, and a communication unit 340. The user terminal 30 is a general personal computer, a tablet terminal, a smartphone, or the like.

The control unit 310 controls operation of each part of the main body of the user terminal 30.

The display 320 displays a screen corresponding to the state of the main body of the user terminal 30. The operation unit 330 includes input devices such as a mouse, a keyboard (software keyboard), or a touch panel. The operation unit 330 accepts the user's input operation to the user terminal 30. The communication unit 340 performs data communication with the server device 10 connected via the network 20.

The control unit 310 of the user terminal 30 is constituted by a hardware CPU, a memory, and other electronic circuits. The control unit 310 may alternatively be constituted by an LSI in which a hardware CPU, a memory, and so on, are integrated.

A specific processing concept of the user terminal 30 will be described using FIGS. 4, 5A, 5B, and 5C.

FIG. 4 is an illustrative diagram of the display 320 of the user terminal 30. The user terminal 30 displays, on the display 320, questions distributed from the server device 10. The user terminal 30 in the example shown in FIG. 4 is a tablet terminal, and a software keyboard is used as the operation unit 330.

The display 320 displays the questions distributed from the server device 10 (questions to be answered by the user) and input portions 321 and portions 322 that are answer sections to which answers to these questions are to be input. The content of input to be accepted, the size, and the number of input portions 321 and 322 change in accordance with the questions to be answered by the user.

The user inputs kana characters 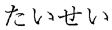 (transcription: "taisei") to the input portion 321, and presses a conversion button in the operation unit 330. The communication unit 340 of the user terminal 30 transmits the input kana characters 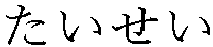 to the server device 10.

The communication unit 130 of the server device 10 outputs the kana characters 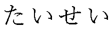 received from the user terminal 30 to the character string obtainment unit 110a. The character string obtainment unit 110a outputs the kana characters 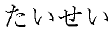 to the candidate retrieval unit 110b. The candidate retrieval unit 110b obtains conversion candidates from the dictionary database 120 using the kana characters 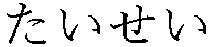 as a key.

The candidate retrieval unit 110b outputs the conversion candidates to the sequence determination unit 110c. The sequence determination unit 110c determines the sequence of the conversion candidates using random numbers. For example, the sequence determination unit 110c determines the sequence of the conversion candidates as 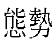 , 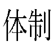 , 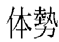 , 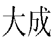 , 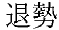 , 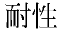 , and 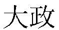 (all of which are transcribed as taisei ( 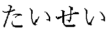 )) in some cases, or determines it as 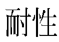 , 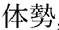 , 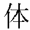 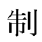 , 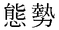 , 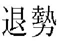 , 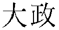 and 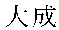 in other cases, or determines it as yet another sequence.

The communication unit 130 transmits, to the user terminal 30, the conversion candidates obtained by the candidate retrieval unit 110b and the sequence of the conversion candidates determined by the sequence determination unit 110c. The user terminal 30 displays the conversion candidates received by the communication unit 340 in a conversion candidate display section 331 in the received sequence. If, for example, the determined sequence of the conversion candidates is 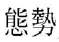 , 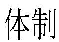 , 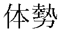 , 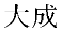 , 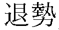 , 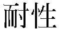 , and 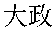 , the user terminal 30 displays these conversion candidates in the conversion candidate display section 331 as shown in FIG. 4A. If the determined sequence of the conversion candidates is 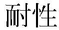 , 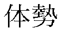 , 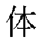 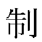 , 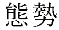 , 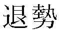 , 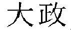 , and 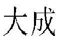 , the user terminal 30 displays these conversion candidates in the conversion candidate display section 331 as shown in FIG. 4B.

The user performs an operation to select a conversion candidate that the user thinks is the answer from the conversion candidates randomly displayed on the display 320 using the mouse or the keyboard, serving as the input device, or by means of a touch operation.

The communication unit 340 of the user terminal 30 transmits the selected conversion candidate as the user's answer to the server device 10. The communication unit 130 outputs the user's answer received from the user terminal 30 to the character string obtainment unit 110a. The character string obtainment unit 110a outputs the user's answer to the grading unit 110d.

The grading unit 110d grades the user's answer to check whether it is correct or incorrect.

A description will be given of screen displays on the display 320 when the user terminal 30 is a personal computer, with reference to FIGS. 5A, 5B, and 5C. FIGS. 5A, 5B, and 5C are illustrative diagrams of the display 320 when the user terminal 30 is a personal computer. The user terminal 30 displays, on the display 320, questions distributed from the server device 10. In the example shown in FIGS. 5A, 5B, and 5C, the operation unit 330 of the user terminal 30 is a hardware keyboard, for example.

When the user terminal 30 is a personal computer as well, the user inputs the kana characters 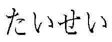 (transcription: "taisei") to the input portion 321 and presses the conversion button in the operation unit 330.

Note that no software keyboard is displayed on the screen of the display 320, as should be obvious from FIGS. 5A, 5B, and 5C.

Processing performed by the user terminal 30 until receiving the conversion candidates and the sequence of the conversion candidates from the server device 10 is the same as that in the above-described case of the tablet terminal.

When the user terminal 30 is a personal computer, if, for example, the determined sequence of the conversion candidates is 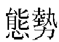 , 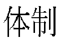 , 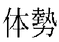 , 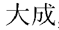 , 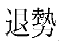 , 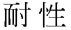 , and 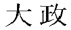 , these conversion candidates are displayed in the conversion candidate display section 331a as shown in FIG. 5A. If the determined sequence of the conversion candidates is 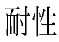 , 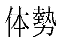 , 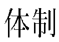 , 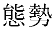 , 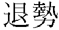 , 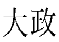 , and 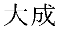 , these conversion candidates are displayed in the conversion candidate display section 331 as shown in FIG. 5B. If the determined sequence of the conversion candidates is , 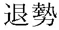 , 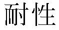 , 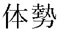 , 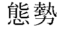 , 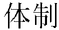 , and 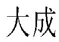 the user terminal 30 displays these conversion candidates in the conversion candidate display section 331a as shown in FIG. 5C.

Thus, the server device 10 randomly determines the sequence of conversion candidates to be displayed on the user terminal 30, using random numbers. That is, the sequence of conversion candidates to be displayed on the user terminal 30 can be dynamically changed every time a conversion operation is performed on the user terminal 30. Accordingly, if the user performs iterative learning and repeatedly answers the same question, the position (rank) at which the conversion candidate that is the correct answer is displayed can be dynamically changed. As a result, a decrease in the learning effect on the user can be suppressed even in iterative learning in which the same question is repeatedly answered.

### 3. Operation example

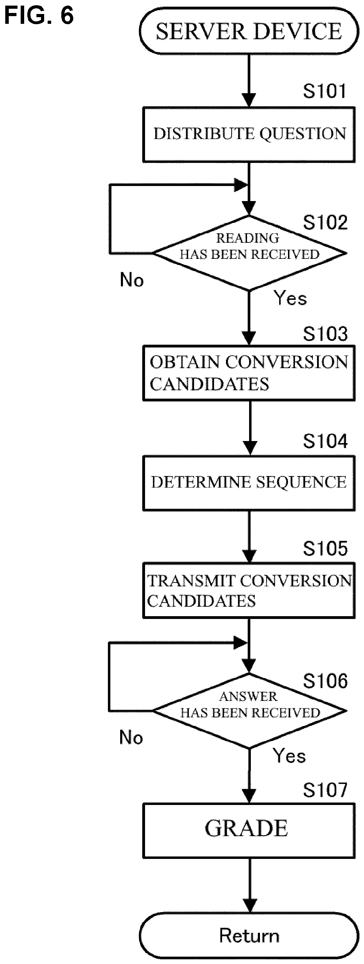

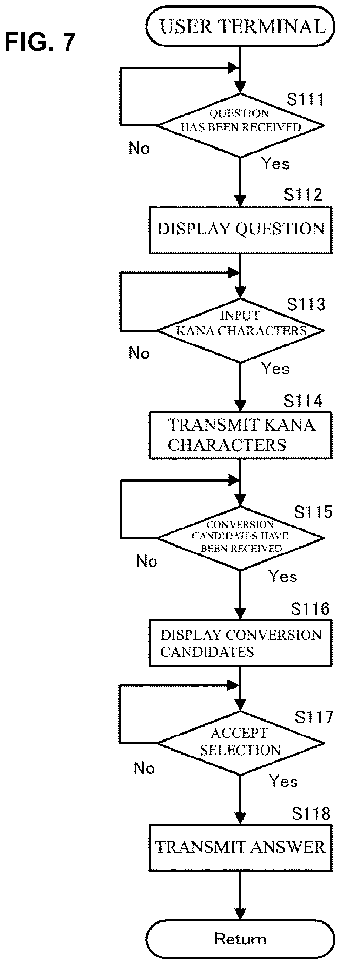

A description will be given below of operation of the server device 10 and the user terminal 30 when the user uses digital learning material. FIG. 6 is a flowchart showing a processing flow of the server device 10. FIG. 7 is a flowchart showing a processing flow of the user terminal 30.

The server device 10 distributes a question in a digital learning material to the user terminal 30 (S101). For example, as shown in FIG. 4, the server device 10 transmits the following question to the user terminal 30: 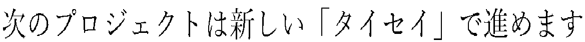 _{∘} (English translation: "The next project will be carried out with a new 'system'.") 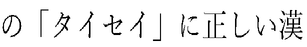 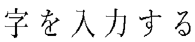 _{∘} (English translation: "Input the correct kanji characters for 'structure'.")

The user terminal 30 receives, via the communication unit 340, the question distributed from the server device 10 (S111). The user terminal 30 displays the received question on the display 320 (S112). The user operates the input device such as a keyboard provided in the operation unit 330, and inputs the kana characters 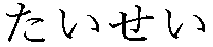 to the input portion 321 (S113).

The user terminal 30 transmits, via the communication unit 340, the input kana characters to the server device 10 (S114). The user terminal 30 waits for conversion candidates to be transmitted from the server device 10.

After distributing the question, the server device 10 waits for a reading (kana characters input by the user) to be received from the user terminal 30 (S102). After receiving, via the communication unit 130, the kana characters (here, 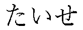 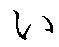 ) input by the user, the character string obtainment unit 110a of the server device 10 outputs the kana characters 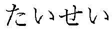 to the candidate retrieval unit 110b.

The candidate retrieval unit 110b retrieves conversion candidates from the dictionary database 120 using the kana characters 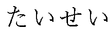 as a key. The candidate retrieval unit 110b retrieves the conversion candidates (S103), and outputs the conversion candidates to the sequence determination unit 110c.

The sequence determination unit 110c randomly determines the sequence of the conversion candidates (S104). At this time, the sequence determination unit 110c determines the sequence of the conversion candidates using random numbers.

The communication unit 130 transmits, to the user terminal 30, the conversion candidates obtained by the candidate retrieval unit 110b and the sequence of the conversion candidates determined by the sequence determination unit 110c (S105).

After receiving the conversion candidates and the sequence of the conversion candidates from the server device 10 (S115), the user terminal 30 displays the received conversion candidates in the received sequence in the conversion candidate display section 331 or 331a (S116).

The user selects the conversion candidate that the user thinks is the answer from the conversion candidates displayed on the conversion candidate display section 331 or 331a using the mouse or the keyboard, serving as the input device, or by means of a touch operation (S117).

The communication unit 340 of the user terminal 30 transmits the selected conversion candidate as the user's answer to the server device 10 (S118).

After transmitting, to the user terminal 30, the conversion candidates obtained by the candidate retrieval unit 110b and the sequence of the conversion candidates determined by the sequence determination unit 110c in S105, the server device 10 waits for the answer to be received from the user terminal 30 (S106). After the server device 10 receives the user's answer at the communication unit 130, the grading unit 110d grades the user's answer received from the user terminal 30 (S107). The grading unit 110d grades the answer to check whether it is correct or incorrect on a user-by-user basis, i.e., for each user terminal 30.

Thus, the server device 10 randomly determines the sequence of conversion candidates to be displayed on the user terminal 30, using random numbers. Thus, a decrease in the learning effect on the user can be suppressed even in iterative learning in which the user repeatedly answers the same question.

### 4. Variations

### Variation 1

The sequence determination unit 110c of the server device 10 described in the above example may also have a configuration in which, when determining the sequence of conversion candidates using random numbers, the random numbers are weighted using a coefficient calculated from the subject, language (Japanese, English, Chinese etc.), and a statistical correct answer rate of the question. Note that the "subject, language (Japanese, English, Chinese etc.), and a statistical correct answer rate of the question" each corresponds to a "type" in the present invention.

This configuration makes it possible to provide conversion candidates appropriate for the user's learning status.

### Variation 2

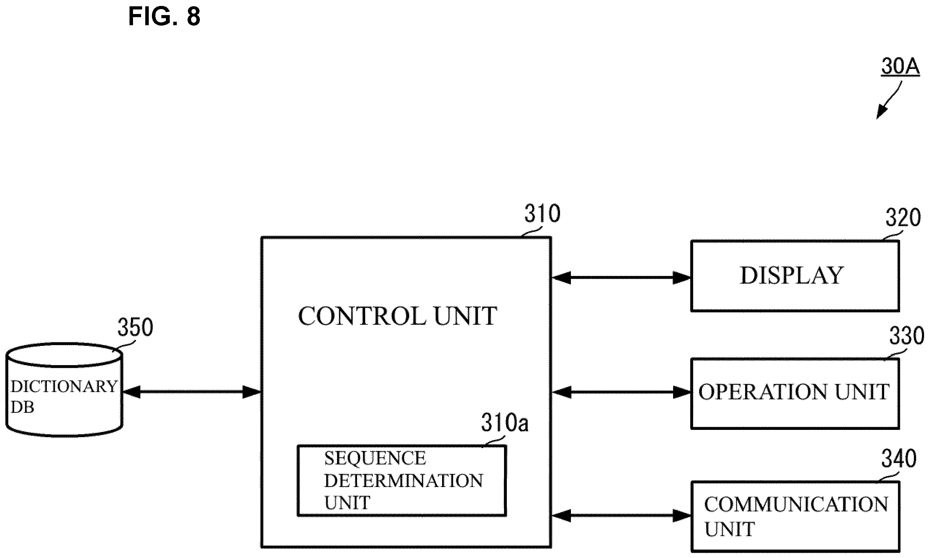

FIG. 8 is a block diagram showing a configuration of a main part of a user terminal 30A of Variation 2. The user terminal 30A of Variation 2 is different from the above example in that the user terminal 30A includes a dictionary DB 350 and the control unit 310 has a sequence determination unit 310a. The dictionary DB 350 has the same configuration as the dictionary DB 120 in the above example. The sequence determination unit 310a has the same configuration as the sequence determination unit 110c in the above example.

The user inputs kana characters to the input portion 321 and presses the conversion button in the operation unit 330. The user terminal 30A obtains conversion candidates from the internal dictionary DB 350. Note that the method for searching the dictionary DB 350 stored in the user terminal 30A is known, and a detailed description thereof is omitted. The sequence determination unit 310a performs the same processing as that in the above example and randomly determines the sequence of the conversion candidates. The user terminal 30A displays, in the conversion candidate display section 331 or 331a, the conversion candidates obtained by looking them up in the dictionary DB 350 in the sequence determined by the sequence determination unit 310a.

The user selects a conversion candidate that the user thinks is the answer from the conversion candidates displayed in the conversion candidate display section 331 or 331a using the mouse or the keyboard, serving as the input device, or by means of a touch operation.

The communication unit 340 of the user terminal 30A transmits the selected conversion candidate as the user's answer to the communication unit 130 of the server device 10. The communication unit 130 outputs the answer to the character string obtainment unit 110a. The character string obtainment unit 110a outputs the answer to the grading unit 110d.

The grading unit 110d grades the answer to check whether it is correct or incorrect on a user-by-user basis, i.e., for each user terminal 30.

This configuration enables the user terminal 30A to complete processing within the user terminal 30A after the question is distributed from the server device 10 to the user terminal 30A until the user terminal 30A transmits the user's answer to the server device 10. That is, even in a situation where the network environment is not functioning properly, the user can use the digital learning material offline in an environment in which the user terminal 30A can download questions from the server device 10 in advance.

### Variation 3

The character input device according to this invention is applicable to not only a certain language (Japanese) for which the user is required to input a representation of the pronunciation (reading (kana)) of a word to be input as a character string as described above, but also languages for which the user is required to input the spelling of a word to be input as a character string. Here, English will be described as an example of a language for which the user is required to input a spelling of a word to be input as a character string.

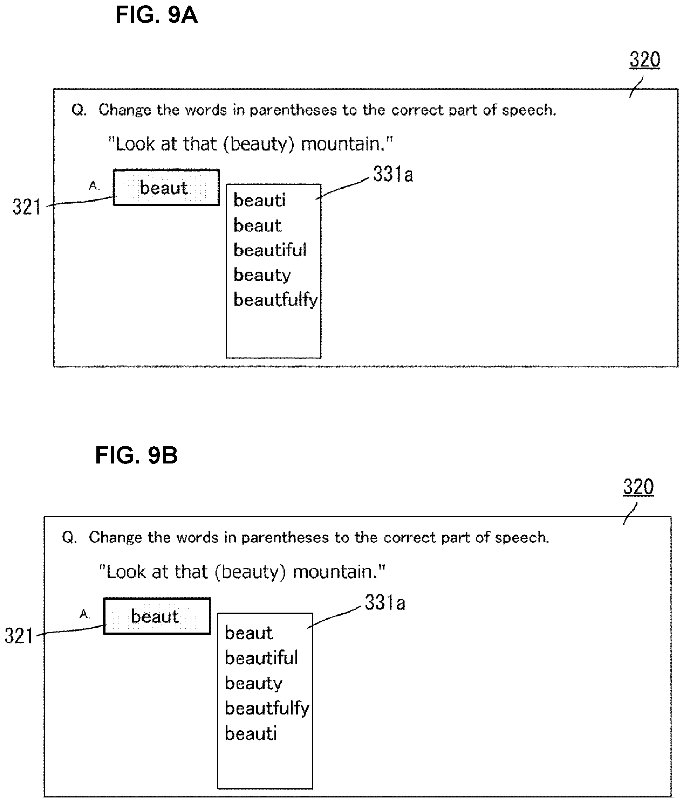

Here, the description will be given of an example in which a question to the user is as follows, as shown in FIG. 9: Change the words in parentheses to the correct part of speech. "Look at that (beauty) mountain."

If the user inputs "beaut" to the input portion 321, the server device 10 (with the configuration in the above application example) obtains "beaut" input by the user from the user terminal 30, and obtains conversion candidates for the obtained "beaut". The server device 10 obtains, for example, beaut, beauti, beautiful, beauty, beautfulfy, or the like, as the conversion candidates for "beaut". The server device 10 also determines the sequence of the conversion candidate for the acquired expression "beaut". For example, the server device 10 determines the sequence of the conversion candidates as beauti, beaut, beautiful, beauty, and beautfulfy in some cases, or determines it as beaut, beautiful, beauty, beautfulfy, and beauti in other cases, or determines it as yet another sequence. This sequence of the conversion candidates is randomly determined using random numbers or the like, as in the above example.

After receiving the conversion candidates and the sequence of the conversion candidates from the server device 10, the user terminal 30 displays the received conversion candidates in the received sequence in the conversion candidate display section 331a.

FIG. 9A shows an example where the sequence of the conversion candidates is beauti, beaut, beautiful, beauty, and beautfulfy. FIG. 9B shows an example where the sequence of the conversion candidates is beaut, beautiful, beauty, beautfulfy, and beauti.

Note that in Variation 3 as well, the server device 10 may perform the same processing as in the above example to grade the conversion candidate that the user determines as the answer and selects.

FIGS. 9A and 9B show an example where the user terminal 30 is a personal computer. However, if the user terminal 30 is a tablet terminal, conversion candidates are displayed in the determined sequence in the conversion candidate display section 331.

In Variation 3 as well, the user terminal 30 may be configured to obtain conversion candidates for "beaut" input by the user and perform processing to determine the sequence of the conversion candidates.

Furthermore, the languages to which the character input device according to this invention is applicable may also be any other language such as Chinese and German in addition to Japanese and English mentioned above.

Note that this invention is not strictly limited to the above embodiment, and can be embodied by modifying constituent elements without departing from the gist of the invention at the implementation stage. In particular, the procedure of operation processing performed by each device is not limited to the above-described order, and the order may be changed as necessary. Furthermore, a plurality of constituent elements disclosed in the above embodiment can also be combined as appropriate to form various inventions. For example, some constituent elements may be deleted from all the constituent elements described in the embodiment. Furthermore, constituent elements of different embodiments may be combined as appropriate.

Furthermore, the correspondence relationship between the configurations according to this invention and the configurations according to the above-described embodiment can be described as in the following supplementary note.

### Supplementary note

A character input device (10) comprising:
a candidate retrieval unit (110b) configured to retrieve conversion candidates for an input character string that is input; and
a sequence determination unit (110c) configured to determine a sequence of the conversion candidates,
wherein the sequence determination unit (110c) dynamically changes a parameter used to determine the sequence of the conversion candidates.

### LIST OF REFERENCE NUMERALS

- 10: Server device
- 20: Network
- 30, 30A: User terminal
- 110: Control unit
- 110a: Character string obtainment unit
- 110b: Candidate retrieval unit
- 110c: Sequence determination unit
- 110d: Grading unit
- 120: Dictionary database (dictionary DB)
- 130: Communication unit
- 310: Control unit
- 310a: Sequence determination unit
- 320: Display
- 321, 322: Input portion
- 330: Operation unit
- 331, 331a: Conversion candidate display section
- 340: Communication unit
- 350: Dictionary database (dictionary DB)

## Claims

1. A character input device (10) comprising:
a candidate retrieval unit (110b) configured to retrieve conversion candidates for an input character string that is input; and
a sequence determination unit (110c) configured to determine a sequence of the conversion candidates,
wherein the sequence determination unit (110c) dynamically changes a parameter used to determine the sequence of the conversion candidates.

2. The character input device (10) according to claim 1, wherein the parameter is a random number generated in response to the input of the input character string.

3. The character input device (10) according to claim 1 or 2, further comprising a communication unit (130) configured to transmit and receive the input character string and the conversion candidates.

4. The character input device (10) according to any one of claims 1 to 3, further comprising a grading unit (110d) configured to grade an answer selected from the conversion candidates.

5. The character input device (10) according to any one of claims 1 to 4,
wherein the sequence determination unit (110c) calculates a weight in accordance with a type of the conversion candidates and determines the sequence of the conversion candidates while reflecting the weight.

6. A character input method in which an information processing apparatus executes:
a candidate retrieval step of retrieving conversion candidates for an input character string that is input; and
a sequence determination step of determining a sequence of the conversion candidates,
wherein the sequence determination step is a step of dynamically changing a parameter used to determine the sequence of the conversion candidates.

7. A character input program that causes an information processing device to execute:
a candidate retrieval step of retrieving conversion candidates for an input character string that is input; and
a sequence determination step of determining a sequence of the conversion candidates,
wherein the sequence determination step is a step of dynamically changing a parameter used to determine the sequence of the conversion candidates.
